# EUROPÄISCHE PATENTSCHRIFT

(11) **EP 2 996 062 B1**
(45) Veröffentlichungstag und Bekanntmachung des Hinweises auf die Patenterteilung: **17.01.2018**
(21) Anmeldenummer: 15187499.7
(22) Anmeldetag: 31.07.2005
(51) Int. Cl.: G06F 21/56, G06F 21/60

(54) **SICHERHEITSMODUL UND VERFAHREN ZUM STEUERN UND KONTROLLIEREN EINES DATENVERKEHRS EINES PERSONALCOMPUTERS**
SECURITY MODULE AND METHOD FOR CONTROLLING AND MONITORING THE DATA TRAFFIC OF A PERSONAL COMPUTER
MODULE DE SECURITE ET PROCEDE DE COMMANDE ET DE CONTROLE D'UN TRAFIC DE DONNEES D'UN ORDINATEUR PERSONNEL

(30) Priorität: 02.08.2004 DE 102004038040; 30.03.2005 DE 102005014837
(43) Veröffentlichungstag der Anmeldung: 16.03.2016
(62) Teilanmeldung aus: 05782466.6
(73) Patentinhaber: Mahltig Management- und Beteiligungs GmbH, 14167 Berlin (DE)
(72) Erfinder: Mahltig, Holger, 13437 Berlin (DE)
(74) Vertreter: 2s-ip Schramm Schneider Bertagnoll Patent- und Rechtsanwälte Part mbB

(56) Entgegenhaltungen:
- WO-A2-02/27445
- US-B1- 6 212 635

## Beschreibung

Die Erfindung liegt auf dem Gebiet von Vorrichtungen und Verfahren zum Gewährleisten der Datensicherheit von Personalcomputern.

### Stand der Technik

Moderne Personalcomputer weisen eine wachsende Komplexität sowohl hinsichtlich ihrer Hardwarekonfiguration als auch im Zusammenhang mit der Software auf Sie umfassen nicht nur eine Vielzahl von internen, das heißt innerhalb des Gehäuses angeordneten, und externen, das heißt außerhalb des Gehäuses angeordneten, Peripheriegeräten und weiteren Elementen, beispielsweise Taktgebern, mit jeweils eigener Steuerelektronik, sondern müssen auch eine Vielzahl von Abläufen gleichzeitig ausführen. Außerdem sind heutige Personalcomputer auf unterschiedlichsten Wegen mit anderen Personalcomputern und/oder weiteren Datenverarbeitungsmitteln, beispielsweise Servern, Datenbanken, Druckern oder dergleichen, über Kommunikationsnetze, beispielsweise das Internet, vernetzt.

Neben der Geschwindigkeit der Datenverarbeitung und der Datenübermittlung ist hierbei die Datensicherheit von großer Bedeutung. Einerseits hat die wachsende Komplexität zur Folge, dass unerwünschte Veränderungen von Daten, sei es durch Mängel in der Software oder auf Grund von Bedienfehlern, nicht vermieden werden können. Zum anderen führt die zunehmende Vernetzung dazu, dass das Verhindern unerlaubter Zugriffe auf die Daten, wie sie beispielsweise mittels Computerviren erfolgen, immer schwieriger wird.

Softwarefehler, Bedienfehler und Computerviren werden allgemein als unterschiedliche Quellen für Datenfehler angesehen, die sogar zum Datenverlust führen können, und die Versuche, diese Quellen zu vermeiden, basieren dementsprechend auf sehr unterschiedlichen Ansätzen. Beispielsweise wird zur Verringerung von Bedienfehlern der Zugriff von Benutzern auf bestimmte Daten eingeschränkt, auf die beispielsweise nur nach korrekter Eingabe eines Authentisierungscodes frei zugegriffen werden kann. Auch kann eine Festplatte in Segmente eingeteilt werden, von denen einige für den Benutzer nicht beliebig zugreifbar sind. Auch wenn diese Vorsichtsmaßnahmen mittels Hardware implementiert sein können, schränken sie nur den Umfang der Daten ein, auf die auf unsicherem Wege zugegriffen werden kann. Diese Daten können aber immer noch, beispielsweise durch Bedienfehler, beschädigt werden. Zumeist werden derartige Sicherheitsvorkehrungen jedoch mittels Software implementiert, und können somit von Computerviren umgangen werden, die sich in der Software eingenistet haben.

Herkömmliche, auf dem Markt vorhandene Programme gegen Computerviren, sogenannte Virenschutz- oder Antivirusprogramme, funktionieren in der Weise, dass der gesamte Speicher des Personalcomputers vom Antivirusprogramm durchsucht wird. Die sich im Speicher befindenden Daten werden mit Programmcodes bekannter Computerviren verglichen, und bei einer Übereinstimmung werden Schutzmaßnahmen unternommen, um diese schädlichen Daten zu entfernen. Hierbei kann jedoch bestenfalls ein Schutz vor bereits bekannten Computerviren erlangt werden. Somit sind Antivirusprogramme bei neuen, bislang nicht bekannten Computerviren genauso ineffektiv wie bei Bedien- und Softwarefehlern. Außerdem besteht die Gefahr, dass ein Antivirusprogramm, welches lediglich als Software im Speicher des Personalcomputers abgelegt ist, selbst Ziel eines Angriffs von Computerviren wird.

Aus dem Dokument US 5,289,540 ist eine Steckkarte bekannt, die einen Datenfluss zwischen Laufwerken und der restlichen Hardware eines Personalcomputers kontrolliert. Die Steckkarte wird vom Betriebssystem des Personalcomputers bei der Initialisierung eingerichtet. Das zur Steuerung der Steckkarte benutzte Programm ist hierbei in einem Arbeitsspeicher des Personalcomputers abgelegt und überprüft die Zugriffsrechte eines Benutzers durch eine Authentifizierung mittels Abfrage eines Benutzernamens und eines Passwortes. Ähnlich wie im Falle des Antivirusprogramms besteht auch hier die Gefahr, dass das zur Steuerung der Steckkarte benutzte Programm, welches sich im Arbeitsspeicher des Personalcomputers befindet, auf Grund eines Softwarefehlers, eines Bedienfehlers und/ oder durch einen Computervirus modifiziert wird. Außerdem kann nach einer Authentifizierung nicht davon ausgegangen werden, dass alle Zugriffe des Benutzers auf die ihm zur Verfügung gestellten Daten zulässig und von der Software fehlerfrei interpretiert werden.
Das Dokument US 6,564,326 offenbart ein Verfahren, bei dem ein Coprozessor in einem Personalcomputer mit einem Prozessor eingebaut wird. Der Coprozessor überwacht den Personalcomputer bis sichergestellt ist, dass sich dieser in einem Zustand frei von schädlichen Programmen, beispielsweise Computerviren, befindet. Anschließend entkoppelt sich der Coprozessor vom Datenverkehr des Personalcomputers. Der Nachteil bei diesem Verfahren besteht darin, dass weder Datenschäden auf Grund von Bedienfehlern noch solche auf Grund von Softwarefehlern erfasst werden. Zum anderen besteht ein ähnliches Problem wie bei Antivirenprogrammen, dass nämlich bereits bekannt sein muss, welche Programme schädlich sind und welche nicht.

Aus der WO 02/27445 A2 ist ein Sicherheitsmodul zum Blocken und Kontrollieren eines Datenverkehrs eines Personalcomputers mit mehreren Funktionsbauteilen, die jeweils mittels Hardware und/oder Software implementiert sind, bekannt. Die Funktionsbauteile umfassen einen programmierbaren Logikbaustein, einen mit dem programmierbaren Logikbaustein verbundenen Prozessor-Anschluss, zum Austauschen von elektronischen Daten mit einem zentralen Prozessor des Personalcomputers, einen mit dem programmierbaren Logikbaustein verbundenen Festplatten-Anschluss, zum Austauschen von elektronischen Daten mit einer Festplatte des Personalcomputers, und einen mit dem programmierbaren Logikbaustein verbundenen Speicherbaustein, welcher Initialisierungsdaten für den Logikbaustein umfasst. Der programmierbare Logikbaustein kontrolliert den Datenverkehr des Personalcomputers, in dem mittels Programmierung eine Verarbeitungs- und Steuereinrichtung zum Verarbeiten von elektronischen Daten, die zwischen Komponenten des Personalcomputers ausgetauscht werden, implementiert ist. Der programmierbare Logikbaustein arbeitet unabhängig von dem Personalcomputer und ist selbstinitialisierend ausgeführt, sodass er auch bei einem Boot-Vorgang des Personalcomputers eingreifen kann. Der programmierbare Logikbaustein ist so ausgebildet, dass er einen Austausch fehlerhafter Daten und / oder einen unerlaubten Austausch von Daten feststellen kann und gegebenenfalls blockierend eingreifen kann.

### Die Erfindung

Aufgabe der Erfindung ist es, ein Sicherheitsmodul und ein Verfahren zum Steuern und Kontrollieren eines Datenverkehrs eines Personalcomputers anzugeben, welche eine erhöhte Sicherheit im Betrieb des Personalcomputers gewährleisten. Diese Aufgabe wird erfindungsgemäß durch ein Sicherheitsmodul nach dem unabhängigen Anspruch 1 gelöst.

Erfindungsgemäß ist ein Sicherheitsmodul zum Steuern und Kontrollieren eines Datenverkehrs eines Personalcomputers mit mehreren Funktionsbauteilen, die jeweils mittels Hardware und/oder Software implementiert sind, vorgesehen, wobei die mehreren Funktionsbauteile einen programmierbaren Logikbaustein, in dem mittels Programmierung eine Verarbeitungs- und Steuereinrichtung zum Verarbeiten von elektronischen Daten, die zwischen den mehreren Funktionsbauteilen ausgetauscht werden, implementiert ist, einen mit dem programmierbaren Logikbaustein verbundenen Prozessor-Anschluss zum Austauschen von elektronischen Daten mit einem zentralen Prozessor des Personalcomputers, einen mit dem programmierbaren Logikbaustein verbundenen Festplatten-Anschluss zum Austauschen von elektronischen Daten mit einer Festplatte des Personalcomputers, mit dem programmierbaren Logikbaustein verbundene Peripheriegeräte-Anschlüsse zum Austauschen von elektronischen Daten mit an den Personalcomputer gekoppelten Peripheriegeräten zur Dateneingabe und/oder Datenausgabe und einen mit dem programmierbaren Logikbaustein verbundenen Speicherbaustein, welcher Initialisierungsdaten für den Logikbaustein umfasst, umfassen und wobei der programmierbare Logikbaustein selbstinitialisierend ausgeführt ist, um die Verarbeitungs- und Steuereinrichtung in dem programmierbare Logikbaustein mit Hilfe der Initialisierungsdaten selbständig funktionsfähig zu machen.

Das Sicherheitsmodul hat gegenüber dem Stand der Technik den Vorteil, dass ein programmierbarer Logikbaustein den Datenverkehr des Personalcomputers steuert und kontrolliert, welcher vom Personalcomputer unabhängig arbeitet. Das bedeutet, dass der zentrale Prozessor des Personalcomputers den programmierbaren Logikbaustein nicht kontrollieren kann. Mittels Überprüfung von beim Datenverkehr zwischen einzelnen Komponenten ausgetauschten Daten des Personalcomputers, beispielsweise zwischen dem zentralen Prozessor, der Festplatte und den Peripheriegeräten, kann der programmierbare Logikbaustein somit jeden unerwünschten Zugriff auf die Daten auf Grund von Softwarefehlern, Bedienfehlern und/oder Computerviren unterbinden. Da der programmierbare Logikbaustein selbstinitialisierend ausgeführt ist, kann er auch bei einem Boot-Vorgang des Personalcomputers steuernd und kontrollierend eingreifen.

In einer vorteilhaften Ausführungsform der Erfindung sind die Funktionsbauteile als ein gekapseltes System ausgeführt. Das bedeutet, dass die Funktionsbauteile zu einem eigenständig operierenden System zusammengefasst sind. Hierdurch sind im Sicherheitsmodul auftretende Defekte leichter auffindbar, und das Sicherheitsmodul kann in einem solchen Fall einfacher ausgetauscht werden.

Bei einer benutzerfreundlicheren Weiterbildung der Erfindung sind die mehreren Funktionsbauteile auf einer Steckkarte implementiert. Dies erlaubt ein Ausstatten eines herkömmlichen Personalcomputers mit dem Sicherheitsmodul, ohne die Architektur des Personalcomputers modifizieren zu müssen.

Bei einer kompakten Ausführungsform der Erfindung sind die mehreren Funktionsbauteile auf einem Motherboard des Personalcomputers implementiert. Einmal werden hiermit Datenverkehrswege zwischen dem zentralen Prozessor des Personalcomputers und dem Sicherheitsmodul verkürzt, was zu einer Geschwindigkeitssteigerung führt. Zum anderen werden zusätzliche externe Verbindungen, beispielsweise Steckkartenverbindungen, zum Motherboard freigehalten.

Bei einer bevorzugten Weiterbildung der Erfindung sind die mehreren Funktionsbauteile zumindest teilweise in einem Chipsatz des Motherboards gebildet. Hierdurch wird der Platzbedarf für das Sicherheitsmodul minimiert, was beispielsweise für die Anwendung in einem mobilen Personalcomputer von erheblichem Vorteil ist.

Bei einer zweckmäßigen Weiterbildung der Erfindung sind die mehreren Funktionsbauteile zumindest teilweise in einem Northbridge-Chip des Chipsatzes des Motherboards gebildet. Da Northbridge-Chips den zentralen Prozessor mit der restlichen Hardware des Personalcomputers verbinden, können mit dieser Ausführungsform Schnittstellen vom Sicherheitsmodul zu den Peripheriegeräten zumindest teilweise eingespart werden. Mit dieser Einsparung geht auch eine Geschwindigkeitserhöhung einher, da das Sicherheitsmodul nun direkt mit dem zentralen Prozessor kommunizieren kann, anstatt auf eine Kommunikation über ein Bussystem angewiesen zu sein.

Bei einer vorteilhaften Ausgestaltung der Erfindung ist der Speicherbaustein in einem RAM-Speicher des Personalcomputers gebildet. Hierdurch kann ein zusätzlicher Speicher für das Sicherheitsmodul zum Teil oder vollständig eingespart werden, was zu einer kostengünstigeren und kompakteren Bauweise führt.

Bei einer bevorzugten Ausführungsform der Erfindung ist der programmierbare Logikbaustein ein FPGA-Baustein (FPGA - "Field Programmahle Gate Array"). Dies hat den Vorteil, dass für die Herstellung des Sicherheitsmoduls im Hinblick sowohl auf den programmierbaren Logikbaustein selbst als auch auf die zu seiner Programmierung benötigten Programmierhilfsmittel auf die bekannte FPGA-Technologie zurückgegriffen werden kann. Damit können auch rechenintensive Vorgänge statt sequentiell in Software parallel in Hardware und somit zeitsparender ausgeführt werden.

Eine vorteilhafte Weiterbildung der Erfindung sieht vor, dass in dem programmierbaren Logikbaustein mittels der Programmierung eine von der Verarbeitungs- und Steuereinrichtung umfasste Vergleichseinrichtung zum Vergleichen von elektronischen Daten, die zwischen den mehreren Funktionsbauteilen ausgetauscht werden, mit vorgegebenen gespeicherten Kontrolldaten implementiert ist. Diese Ausführungsform erlaubt es dem programmierbaren Logikbaustein beispielsweise einen Austausch fehlerhafter Daten und/oder einen unerlaubten Austausch von Daten festzustellen und gegebenenfalls korrigierend einzugreifen, beispielsweise indem ein derartiger Austausch unterbunden wird. Gleichfalls können die gespeicherten Kontrolldaten in Abhängigkeit von den eingehenden elektronischen Daten angepasst werden. So kann beispielsweise ein bestimmter Tastendruck oder eine über die Netzwerkverbindung empfangene Datenfolge von der Vergleichseinrichtung erkannt wird und diese daraufhin eine vordefinierte Steuerungsfunktion auslösen, deren Ergebnis sich in einer Anpassung der Kontrolldaten manifestiert.

Bevorzugt sieht eine Ausgestaltung der Erfindung vor, dass die mehreren Funktionsbauteile für an die mehreren Funktionsbauteile gekoppelte Geräte beim Datenaustausch als transparent operierende Funktionsbauteile ausgeführt sind. Hierdurch wird sichergestellt, dass die auf dem Personalcomputer laufende Software nicht durch das Vorhandensein des Sicherheitsmoduls beeinflusst wird. Die Software zur Steuerung des Personalcomputers muss somit nicht für einen Gebrauch mit dem Sicherheitsmodul angepasst werden. Als ein weiterer Vorteil dieser Ausführungsform würde ein sich in die Software des Personalcomputers eingenisteter Computervirus nicht feststellen können, ob ein Sicherheitsmodul vorhanden ist, welches umgangen werden sollte.

Teil der Erfindung ist auch ein Verfahren zum Steuern und Kontrollieren eines Datenverkehrs eines Personalcomputers mit Hilfe eines oben beschriebenen Sicherheitsmoduls, wobei ein mit einem programmierbaren Logikbaustein des Sicherheitsmoduls verbundener Prozessor-Anschluss des Sicherheitsmoduls mit einem zentralen Prozessor des Personalcomputers zum Austauschen von elektronischen Daten in Verbindung steht, an einen mit dem programmierbaren Logikbaustein verbundenen Festplatten-Anschluss des Sicherheitsmoduls eine Festplatte des Personalcomputers zum Austauschen von elektronischen Daten gekoppelt ist, an mit dem programmierbaren Logikbaustein verbundene Peripheriegeräte-Anschlüsse des Sicherheitsmoduls Peripheriegeräte zur Dateneingabe und/oder Datenausgabe gekoppelt sind und der programmierbare Logikbaustein mit einem Speicherbaustein, welcher Initialisierungsdaten für den programmierbaren Logikbaustein umfasst, verbunden ist, und wobei das Verfahren die folgenden Schritte umfasst:
- eine Verarbeitungs- und Steuereinrichtung wird in dem programmierbaren Logikbaustein des Sicherheitsmoduls mittels Selbstinitialisierung des programmierbaren Logikbausteins funktionsfähig gemacht, indem die Initialisierungsdaten aus dem Speicherbaustein verwendet werden, und
- ein Datenverkehr von und/oder zu der Festplatte des Personalcomputers sowie ein Datenverkehr zwischen den Peripheriegeräten zur Dateneingabe und/ oder Datenausgabe und dem zentralen Prozessor des Personalcomputers werden ausschließlich über das Sicherheitsmodul ausgeführt und mittels der Verarbeitungs- und Steuereinrichtung gesteuert und kontrolliert.

Vorteilhafterweise ist das Verfahren so ausgestaltet, dass der Datenverkehr von und/oder zu der Festplatte des Personalcomputers sowie der Datenverkehr zwischen den Peripheriegeräten zur Dateneingabe und/oder Datenausgabe und dem zentralen Prozessor des Personalcomputers über das Sicherheitsmodul transparent für den zentralen Prozessor, die Festplatte und die Peripheriegeräte zur Dateneingabe und/oder Datenausgabe ausgeführt werden.

In einer weiteren vorteilhaften Ausgestaltung des Verfahrens werden die Daten des über das Sicherheitsmodul ausgeführten Datenverkehrs in dem Sicherheitsmodul mittels einer Vergleichseinrichtung mit vorgegebenen gespeicherten Vergleichsdaten verglichen. Vorteilhaft kann es zudem sein, wenn die Selbstinitialisierung des programmierbaren Logikbausteins beim Zuschalten einer Betriebsspannung erfolgt.

### Beschreibung bevorzugter Ausführunsgbeispiele

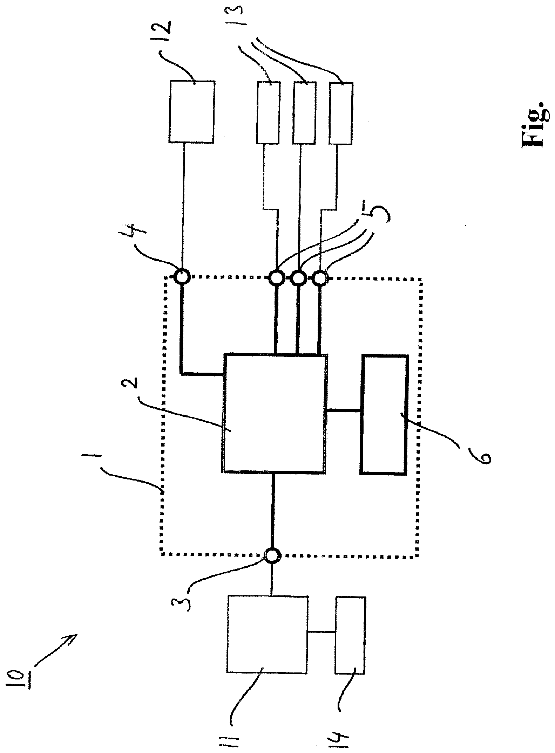

Die Erfindung wird im Folgenden anhand von Ausführungsbeispielen unter Bezugnahme auf eine Zeichnung näher erläutert. Hierbei zeigt die einzige Figur eine schematische Darstellung eines Sicherheitsmoduls mit einem programmierbaren Logikbaustein.

Gemäß der Figur weist ein Sicherheitsmodul 1 mehrere Funktionsbauteile auf, welche einen programmierbaren Logikbaustein 2, einen Prozessor-Anschluss 3, einen Festplatten-Anschluss 4, Peripheriegeräte-Anschlüsse 5 und einen Speicherbaustein 6 umfassen. Das Sicherheitsmodul 1 ist in einem Personalcomputer 10 eingebaut, welcher mit einem zentralen Prozessor beziehungsweise einem Mikroprozessor 11, einer Festplatte 12, einem Speicher 14 und Peripheriegeräten 13 ausgestattet ist. Es kann sich bei dem Personalcomputer 10 um jede Art von Computersystemen mit einem zentralen Prozessor und einer Festplatte handeln. Beispielsweise kann der Personalcomputer 10 einen mobilen Computer, beispielsweise einen Laptop oder einen PDA (PDA - "Personal Digital Assistent), umfassen.

Der programmierbare Logikbaustein 2 kann mittels einer beliebigen Art von programmierbaren Logikbausteinen (auch PLD - "Programmable Logic Device" genannt) gebildet sein, die programmiert werden können, um elektronische Daten zu verarbeiten, welche zwischen den mehreren Funktionsbauteilen ausgetauscht werden. Hierbei kann es sich sowohl um einen mehrmals programmierbaren als auch um einen nur einmal programmierbaren Logikbaustein handeln. Bei den mehrmals programmierbaren Logikbausteinen erfolgt die Programmierung mittels vom programmierbaren Logikbaustein 2 umfassten Speicherzellen, beispielsweise SRAM-, EPROM-, EEPROM- und/oder Flash-Speicherzellen. Vorzugsweise wird für den programmierbaren Logikbaustein 2 ein FPGA-Baustein (FPGA - "Field Programmable Gate Array") verwendet. Als programmierbarer Logikbaustein 2 kann jedoch auch ein CPLD-Baustein (CPLD - "Complex Programmahle Logic Device") oder ein ASIC-Baustein (ASIC - "Application Specific Integrated Circuit") verwendet werden.

Der mit dem programmierbaren Logikbaustein 2 verbundene Prozessor-Anschluss 3 dient dem Datenaustausch zwischen dem Sicherheitsmodul 1 und dem Mikroprozessor 11 des Personalcomputers 10. Wenn der Personalcomputer 10 mehrere Mikroprozessoren umfasst, das heißt wenn es sich um einen sogenannten Multiprozessor-Computer handelt, kann der Prozessor-Anschluss 3 ausgelegt sein, um einen Datenaustausch entweder nur mit einem oder mit zwei oder mehr der mehreren Mikroprozessoren führen zu können. Der Prozessor-Anschluss 3 kann auch ausgelegt sein, um eine indirekte Verbindung zwischen dem programmierbaren Logikbaustein 2 und dem Mikroprozessor 11 herzustellen. Beispielsweise kann diese Verbindung über einen Controller, insbesondere einen Festplattencontroller erfolgen. Hierdurch wird gewährleistet, dass der Mikroprozessor seine Informationen nach wie vor über die Controller mit den Peripheriegeräten austauscht. Dies ist beispielsweise bei Ausführungsformen der Erfindung von Bedeutung, bei denen eine Anfrage des Mikroprozessors 11 an die Festplatte 2 zwar über das Sicherheitsmodul 10 erfolgt, aber der Mikroprozessor 11 das Vorhandensein des Sicherheitsmoduls 10 nicht bemerkt, wenn also die Funktionsbauteile des Sicherheitsmoduls 1 für den Datenaustausch zwischen dem Mikroprozessor 11 und der Festplatte 12 transparent operieren. Hierzu muss das Sicherheitsmodul 10 gegenüber dem Mikroprozessor 11 Funktionen der Festplatte 12 vortäuschen. Das heißt, das Sicherheitsmodul 10 muss über den Prozessor-Anschluss 3 Signale an den Mikroprozessor 11 senden, welche der Mikroprozessor 11 als von der Festplatte 12 stammend interpretiert.

Mit dem programmierbaren Logikbaustein 2 ist weiterhin der Festplatten-Anschluss 4 verbunden, über den eine Verbindung zu einer oder mehreren Festplatte(n) 12 des Personalcomputers 10 hergestellt wird. Bei der Festplatte 12 kann es sich um eine Festplatte jeder verfügbaren Technologie, insbesondere jeder beliebigen Baugröße und/oder Speicherkapazität, handeln, beispielsweise kann sie auch ein sogenanntes MicroDrive umfassen. Die Datenübermittlung von und zu der Festplatte 12 kann mittels eines beliebigen, verkehrsüblichen Kommunikationsstandards erfolgen, beispielsweise eines IDE-, eines EIDE- oder eines SATA- Standards (IDE - "Integrated Drive Electronics", EIDE - "Enhanced IDE", SATA - "Serial Advanced Technology Attachments").

Die Peripheriegeräte-Anschlüsse 5 können Anschlüsse zu jeder Art von Peripheriegeräten 13 umfassen, welche von einem Personalcomputer 10 angesteuert werden können. Insbesondere handelt es sich hierbei um Peripheriegeräte zur Dateneingabe, beispielsweise eine Tastatur, eine Maus, einen Scanner oder dergleichen, und um Peripheriegeräte zur Datenausgabe, beispielsweise eine Crrafikkarte, einen Drucker, eine Soundkarte oder dergleichen. Es können jedoch auch Peripheriegeräte-Anschlüsse 5 zu Peripheriegeräten vorhanden sein, die neben der Dateneingabe auch der Datenausgabe dienen, beispielsweise zu internen (das heißt, sich innerhalb eines Gehäuses des Personalcomputers 10 befindenden) oder zu externen (das heißt, sich außerhalb eines Gehäuses des Personalcomputers 10 befindenden) Speichergeräten sowie zu Netzwerkkarten mit beispielsweise Modem-, ISDN- und/oder LAN-Funktionalität.

Insbesondere Netzwerkkarten 1 stellen eine wichtige Quelle schädlicher Daten dar, weil der Personalcomputer 10 über sie mit Kommunikationsnetzen in Verbindung steht. Außerdem kann der Personalcomputer 10 mittels einer Netzwerkkarte unbeabsichtigt, beispielsweise auf Grund von Softwarefehlern, Bedienfehlern oder Computerviren, Nachrichten an andere am Kommunikationsnetz angeschlossene Computersysteme versenden, beispielsweise mittels Email. Bei einer Ausführungsform der Erfindung ist daher vorgesehen, dass sämtlicher Datenverkehr zwischen dem Mikroprozessor 11 des Personalcomputers 10 und den Netzwerkkarten (nicht dargestellt) über das Sicherheitsmodul 1 erfolgt und vom programmierbaren Logikbaustein 2 gesteuert und/oder kontrolliert wird. Hierbei können Netzwerkkarten mit beliebigen Kommunikationsstandards oder -protokollen vorhanden sein.

Insbesondere kann vorgesehen sein, dass eine oder mehrere der Netzwerkkarten zwei oder mehr sogenannte MAC-Adressen (MAC - "Media Access Control") aufweisen. Die MAC-Adresse ist eine Adresse, welche anjede Netzwerkkarte bei seiner Herstellung vergeben wird und mit welcher die Netzwerkkarte auf einer Übertragungsebene eines Kommunikationsnetzes angesprochen wird, die unterhalb der Übertragungsebene liegt, auf welcher sogenannte IP-Adressen (IP - "Internet Protocol") verwendet werden. Um einen Personalcomputer wahlweise auf einer Systemmanagementebene oder auf einer Betriebssystemebene ansprechen zu können, müssen diese über eine ebenenabhängige MAC-Adresse der Netzwerkkarte oder IP-Adresse des Rechners eindeutig ansprechbar sein. Um eine zusätzliche Netzwerkkarte für das Systemmanagement und eine dafür benötigte zusätzliche Kabelverbindung einzusparen und die bestehende IP-Adressierung nicht ändern zu müssen, ist das Vorhandensein mehrerer MAC-Adressen vorteilhaft.

Die Anschlüsse des Sicherheitsmoduls 1, welche den Prozessor-Anschluss 3, den Festplatten-Anschluss 4 und die Peripheriegeräte-Anschlüsse 5 umfassen, können als einfache Verbindungen ausgelegt sein. Sie können jedoch auch, wenigstens zum Teil, kompliziertere Schaltungen umfassen, welche beispielsweise eine Protokoll- und/oder Pegelanpassung auszutauschender Signale vornehmen. Das Sicherheitsmodul 1 ist mit Codier- und/oder Decodiermitteln ausgestattet, um Signale zwischen unterschiedlichen, im Personalcomputer 10 benutzten Kommunikationsstandards umzuwandeln. Die Codier- und/oder Decodiermittel können als Teile des programmierbaren Logikbausteins 2 und/oder der Anschlüsse ausgebildet sein.

Schließlich dient der Speicherbaustein 6 dazu, dem programmierbaren Logikbaustein 2 Initialisierungsdaten bereitzustellen. Hierbei sollte zumindest ein Teil des Speicherbausteins 6 als nichtflüchtiger Speicherbaustein ausgelegt sein, um seinen Speicherinhalt nach dem Abschalten der Betriebsspannung nicht zu verlieren. Die Initialisierungsdaten sind für den programmierbaren Logikbaustein 2 jederzeit, insbesondere sofort nach dem Anlegen einer Betriebsspannung, verfügbar und dienen dazu, dass das Sicherheitsmodul 1 unabhängig von externen Speicherbauteilen, beispielsweise dem RAM-Speicher des Personalcomputers 10, agieren kann. Bei dem nichtflüchtigen Speicherbaustein kann es sich um jede Art von Speicherbausteinen handeln, welcher seinen Inhalt auch nach dem Abschalten der Betriebsspannung beibehält. Beispielsweise kann der Speicherbaustein 6 einen Flash-Speicher umfassen. Es kann sich auch um einen im Prinzip flüchtigen Speicherbaustein handeln, welcher von einer eigenen Energiequelle, beispielsweise einer Batterie, gespeist wird. Der nichtflüchtige Speicherbaustein kann auch im programmierbaren Logikbaustein 2 integriert sein.

Zusätzlich zum nichtflüchtigen Speicherbaustein kann der Speicherbaustein 6 auch einen eigenen flüchtigen Speicherbaustein, beispielsweise einen RAM-Speicher umfassen, in welchem der programmierbare Logikbaustein 2 während des Betriebs Daten zur späteren Benutzung ablegen kann. Hierfür kann jedoch auch ein Teil des Speichers 14 des Personalcomputers 10 herangezogen werden, indem dieser Teil bei der Selbstinitialisierung des programmierbaren Logikbausteins 2 für das Sicherheitsmodul 1 reserviert wird und der Mikroprozessor 11 nur über den restlichen Teil des Speichers 14 frei verfügen kann. In ähnlicher Weise kann auch ein Teil der Speicherkapazität der Festplatte 12 vom Sicherheitsmodul 1 beansprucht werden.

Die Peripheriegeräte 13, die Festplatte 12 und/oder der Mikroprozessor 11 können über ein Bussystem des Personalcomputers 10 angesprochen werden. Insbesondere bei einer Ausführungsform des Sicherheitsmoduls 1 als PCI-Steckkarte können hierdurch separate physikalische Anschlüsse auf dem Sicherheitsmodul 1 eingespart werden.

Damit das Sicherheitsmodul 1 seine Kontroll- und Steuerfunktion möglichst umfassend ausführt, wird in einer Ausführungsform der gesamte Datenverkehr zwischen dem Mikroprozessor 11, der Festplatte 12 und den Peripheriegeräten 13 über das Sicherheitsmodul 1 geführt. Es kann aus Geschwindigkeitsgründen vorteilhaft sein, dass bestimmte Daten ohne den Umweg über das Sicherheitsmodul 1 ausgetauscht werden. Beispielsweise kann bei Vorhandensein mehrerer Festplatten, die Festplatte mit weniger wichtigen Daten auch auf direktem Wege mit dem Mikroprozessor 11 verbunden sein.

Damit das Sicherheitsmodul 1 den Datenverkehr des Personalcomputers 10 steuern und kontrollieren kann, müssen zunächst die Funktionsbauteile des Sicherheitsmoduls 1 in einen definierten Ausgangszustand versetzt werden. Hierzu erfolgt nach dem Anlegen einer Betriebsspannung eine Initialisierung des programmierbaren Logikbausteins 2, bei der eine Verarbeitungs- und Steuereinrichtung im programmierbaren Logikbaustein 2 vorbereitet und mit Initialisierungsdaten versorgt wird. Die Verarbeitungs- und Steuereinrichtung dient dazu, alle Funktionsbauteile des Sicherheitsmoduls 1 unabhängig vom Mikroprozessor 11 zu steuern.

Der programmierbare Logikbaustein 2 ist nach der Initialisierung in der Lage, Daten über die Anschlüsse zu empfangen und mit im Speicherbaustein 6 abgelegten Daten zu vergleichen, um als Reaktion darauf eine Handlung auszuführen, beispielsweise einen Warnhinweis zu erzeugen, wenn wichtige Daten gelöscht werden sollen.

Ein wichtiger Vorgang ist die Initialisierung der Festplatte 12 mittels im BIOS, einem Mittlerprogramm zwischen der Software und der Hardware eines Personalcomputers, gespeicherten Programmroutinen. Während eines Initialisierungsvorgangs des Personalcomputers 10 (auch Boot-Vorgang genannt) werden über einen Festplattencontroller technische Daten der Festplatte 12, beispielsweise die Festplatten-Speicherkapazität betreffend, abgefragt. Diese Anfrage wird über den Prozessor-Anschluss 3 vom programmierbaren Logikbaustein 2 empfangen und mit Hilfe von im Speicherbaustein 6 abgelegten, die Festplatte 12 betreffenden Daten beantwortet. Wenn beispielsweise ein Bereich der Festplatte 12 vom Sicherheitsmodul 1 belegt ist, so wird dem Mikroprozessor 11 eine Festplatten-Speicherkapazität mitgeteilt, welche um die Speicherkapazität des belegten Bereichs vermindert ist.

Ein Zugriff des Mikroprozessors 11 auf die Festplatte 12 erfolgt hiernach so, dass Anweisungen des Mikroprozessors 11 an die Festplatte 12 zunächst vom programmierbaren Logikbaustein 2 über den Prozessor-Anschluss 3 empfangen werden. Diese Anweisungen werden dann mittels der Verarbeitungs- und Steuereinrichtung überprüft und mit im Speicherbaustein 6 abgelegten Daten verglichen. Wenn die Verarbeitungs- und Steuereinrichtung feststellt, dass eine der Anweisung entsprechende Handlung nicht zulässig ist, wenn also der Mikroprozessor 11 versucht, eine unerlaubte Handlung durchzuführen, beispielsweise auf einen ihm nicht zugänglichen Bereich der Festplatte 12 zuzugreifen, dann wird diese Anweisung nicht an die Festplatte 12 weitergeleitet. Stattdessen wird dem Mikroprozessor 11 über den Prozessor-Anschluss 3 eine Fehlermeldung übermittelt, welcher mit einer Fehlermeldung der Festplatte 12 identisch ist. Auf diese Weise wird dem Mikroprozessor 11 vorgetäuscht, dass ein direkter Datenaustausch zwischen ihm und der Festplatte 12 stattgefunden hat. Die Fehlermeldung kann beispielsweise eine Nachricht sein, welche darüber informiert, dass der betreffende Bereich der Festplatte 12 nicht vorhanden sei. Zulässige Anweisungen und Daten werden unverändert über den Festplatten-Anschluss 4 an die Festplatte 12 übermittelt. Das bedeutet, der programmierbare Logikbaustein 2, der Prozessor-Anschluss 3 und der Festplatten-Anschluss 4 operieren transparent.

Auf ähnliche Weise wird mit einem Datenaustausch mit den Peripheriegeräten 13 zur Dateneingabe und/oder Datenausgabe verfahren. Eine Dateneingabe kann beispielsweise mittels einer Tastatur erfolgen. Hierbei wird beim Niederdrücken einer Taste oder einer Tastenkombination zunächst ein Signal hierüber an einen Peripheriegeräte-Anschluss 5 des Sicherheitsmoduls 1 gesendet. Das Signal wird dort decodiert oder direkt an das programmierbare Logikbaustein 2 weitergeleitet. Stellt die Verarbeitungs- und Steuereinrichtung des programmierbaren Logikbausteins 2 auf Grund der im Speicherbaustein 6 gespeicherten Daten fest, dass die Ausführung einer mit der Tastenkombination assoziierten Anweisung zu einer unerlaubten Handlung führt, so wird das Signal entweder gänzlich ignoriert und/oder ein entsprechender Warnhinweis wird über ein anderes Peripheriegerät, beispielsweise über einen Monitor, angezeigt. Auf diese Weise kann aber auch ein Befehl an die Verarbeitungs- und Steuereinrichtung selbst gegeben werden, indem dieser ausschließlich innerhalb der Verarbeitungs- und Steuereinrichtung zum Starten einer Softwareroutine benutzt, der Tastendruck aber nicht an den Mikroprozessor 11 weitergeleitet wird. So wird auch verhindert, dass eine auf dem Mikroprozessor 11 laufende schädliche Software die Bedienung der Verarbeitungs- und Steuereinrichtung überwacht.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Sicherheitsmodul (1) zum Steuern und Kontrollieren eines Datenverkehrs eines Computersystems mit einem zentralen Prozessor (Personalcomputer) (10), mit mehreren Funktionsbauteilen, die jeweils mittels Hardware und Software implementiert sind, die mehreren Funktionsbauteile umfassend:
- einen programmierbaren Logikbaustein (2), der den Datenverkehr des Personalcomputers (10) steuert und kontrolliert, in dem mittels Programmierung eine Verarbeitung- und Steuereinrichtung zum Verarbeiten von elektronischen Daten, die zwischen den Komponenten des Personalcomputers ausgetauscht werden, implementiert ist,
wobei
die Verarbeitungs- und Steuereinrichtung dazu dient, alle Funktionsbauteile des Sicherheitsmoduls (1) unabhängig vom Mikroprozessor (11) zu steuern,
wobei
der programmierbare Logikbaustein (2) beim Zuschalten einer Betriebsspannung selbstinitialisierend ausgeführt ist,
wobei
der programmierbare Logikbaustein (2) so ausgebildet ist, dass er einen unerlaubten Austausch von Daten feststellen und gegebenenfalls korrigierend eingreifen kann.
- einen mit dem programmierbaren Logikbaustein (2) verbundenen Prozessor-Anschluss (3) zum Austauschen von elektronischen Daten mit einem zentralen Prozessor (11) des Personalcomputers (10);
- mit dem programmierbaren Logikbaustein (2) verbundene Peripheriegeräte-Anschlüsse (5) zum Austauschen von elektronischen Daten mit an den Personalcomputer (10) gekoppelten Peripheriegeräten (13) zur Dateneingabe und/oder Datenausgabe,
und
- einen mit dem programmierbaren Logikbaustein (2) verbundenen Speicherbaustein (6), welcher Initialisierungsdaten für den Logikbaustein (2) umfasst,
wobei
in dem programmierbaren Logikbaustein (2) mittels der Programmierung eine von der Verarbeitungs- und Steuereinrichtung umfasste Vergleichseinrichtung implementiert ist, zum Vergleichen von elektronischen Daten, die zwischen Komponenten des Personalcomputers ausgetauscht werden, mit vorgegebenen gespeicherten Kontrolldaten; und
wobei
die gespeicherten Kontrolldaten in Abhängigkeit von den eingehenden elektronischen Daten angepasst werden können, wobei eine empfangene Datenfolge von der Vergleichsvorrichtung erkannt wird und diese daraufhin eine vordefinierte Steuerungsfunktion auslöst, deren Ergebnis sich in einer Anpassung der Kontrolldaten manifestiert, wobei die Datenfolge von der Tastatur oder über die Netzwerkverbindung des Personalcomputers empfangen wird.

2. Sicherheitsmodul (1) nach Anspruch 1, **dadurch gekennzeichnet, dass** die mehreren Funktionsbauteile als ein gekapseltes System ausgeführt sind, so dass die Funktionsbauteile zu einem eigenständig operierenden System zusammengefasst sind.

3. Sicherheitsmodul (1) nach Anspruch 1, mit einer in dem programmierbaren Logikbaustein (2) mittels der Programmierung implementierten, einer von der Verarbeitungs- und Steuereinrichtung umfassten Vergleichseinrichtung zum Vergleichen von elektronischen Daten, die zwischen den mehreren Funktionsbauteilen ausgetauscht werden, mit vorgegebenen gespeicherten Kontrolldaten.

4. Sicherheitsmodul (1) nach einem der Ansprüche 1 bis 3, **dadurch gekennzeichnet, dass** die mehreren Funktionsbauteile auf einer Steckkarte implementiert sind.

5. Sicherheitsmodul (1) nach einem der Ansprüche 1 bis 4, **dadurch gekennzeichnet, dass** die mehreren Funktionsbauteile auf einem Motherboard des Personalcomputers (10) implementiert sind.

6. Sicherheitsmodul (1) nach Anspruch 5, **dadurch gekennzeichnet, dass** die mehreren Funktionsbauteile zumindest teilweise in einem Chipsatz des Motherboards implementiert sind.

7. Sicherheitsmodul (1) nach Anspruch 6, **dadurch gekennzeichnet, dass** die mehreren Funktionsbauteile zumindest teilweise in einem Northbridge-Chip des Chipsatzes des Motherboards gebildet sind.

8. Sicherheitsmodul (1) nach einem der vorangehenden Ansprüche, **dadurch gekennzeichnet, dass** der Speicherbaustein (6) in einem RAM-Speicher des Personalcomputers (10) gebildet ist.

9. Sicherheitsmodul (1) nach einem der vorangehenden Ansprüche, **dadurch gekennzeichnet, dass** die Schaltung mit einer Netzwerkkarte verbunden ist, welche eine weitere fest vergebene MAC-Adresse, Media Access Control-Adresse, aufweist.

10. Sicherheitsmodul (1) nach einem der vorangehenden Ansprüche, **dadurch gekennzeichnet, dass** die gespeicherten Kontrolldaten in Abhängigkeit von den eingehenden elektronischen Daten angepasst werden können.

11. Sicherheitsmodul (1) nach einem der vorangehenden Ansprüche, **dadurch gekennzeichnet, dass** der Personalcomputer (10) ein mobiler Computer, beispielsweise ein Laptop oder ein Personal Digital Assistant ist.

12. Verfahren zum Steuern und Kontrollieren eines Datenverkehrs eines Personalcomputers (10) mit Hilfe eines Sicherheitsmoduls (1) nach einem der vorangehenden Ansprüche, wobei ein mit einem programmierbaren Logikbaustein (2) des Sicherheitsmoduls (1) verbundener Prozessor-Anschluss (3) des Sicherheitsmoduls (1) mit einem zentralen Prozessor (11) des Personalcomputers (10) zum Austauschen von elektronischen Daten in Verbindung steht, an einen mit dem programmierbaren Logikbaustein (2) verbundenen Festplatten-Anschluss (4) des Sicherheitsmoduls (1) eine Festplatte (12) des Personalcomputers (10) zum Austauschen von elektronischen Daten gekoppelt ist, an mit dem programmierbaren Logikbaustein (2) verbundene Peripheriegeräte-Anschlüsse (5) des Sicherheitsmoduls (1) Peripheriegeräte (13) zur Dateneingabe und/ oder Datenausgabe gekoppelt sind und der programmierbare Logikbaustein (2) mit einem Speicherbaustein (6), welcher Initialisierungsdaten für den programmierbaren Logikbaustein (2) umfasst, verbunden ist, und wobei das Verfahren die folgenden Schritte umfasst:
- eine Verarbeitungs- und Steuereinrichtung wird in dem programmierbaren Logikbaustein (2) des Sicherheitsmoduls (1) mittels Selbstinitialisierung des programmierbaren Logikbausteins (2) funktionsfähig gemacht, indem die Initialisierungsdaten aus dem Speicherbaustein (6) verwendet werden; und
- ein Datenverkehr von und / oder zu der Festplatte (12) des Personalcomputers (10) sowie ein Datenverkehr zwischen den Peripheriegeräten (12) zur Dateneingabe und/ oder Datenausgabe und dem zentralen Prozessor (11) des Personalcomputers (10) werden ausschließlich über das Sicherheitsmodul (1) ausgeführt und mittels der Verarbeitungs- und Steuereinrichtung gesteuert und kontrolliert.

13. Verfahren nach Anspruch 12, **dadurch gekennzeichnet, dass** der Datenverkehr von und/oder zu der Festplatte (12) des Personalcomputers (10) sowie der Datenverkehr zwischen den Peripheriegeräten (13) zur Dateneingabe und / oder Datenausgabe und dem zentralen Prozessor (11) des Personalcomputers (10) über das Sicherheitsmodul (1) transparent für den zentralen Prozessor (11), die Festplatte (12) und die Peripheriegeräte (13) zur Dateneingabe und/ oder Datenausgabe ausgeführt werden.

14. Verfahren nach Anspruch 12 oder 13, **dadurch gekennzeichnet, dass** Daten des über das Sicherheitsmodul (1) ausgeführten Datenverkehrs in dem Sicherheitsmodul (1) mittels einer Vergleichseinrichtung mit vorgegebenen gespeicherten Vergleichsdaten verglichen werden.

15. Verfahren nach einem der Anspruch 12 bis 14, **dadurch gekennzeichnet, dass** Selbstinitialisierung des programmierbaren Logikbausteins (2) beim Zuschalten einer Betriebsspannung erfolgt.

## Claims

1. A security module (1) for controlling and monitoring data traffic in a computer system including a central processor (personal computer) (10) that has a plurality of functional components each implemented by hardware and software, said functional components comprising:
- a programmable logic component (2) which controls and monitors data traffic in the personal computer (10) and in which, by means of programming, a process and control device for processing electronic data exchanged between the components of the personal computer is implemented;
wherein
the process and control unit is operable to control all the functional components of the security module (1) independently of the microprocessor (11),
wherein
the programmable logic component (2) is designed to auto-initialise itself when the operating voltage is switched on,
wherein
the programmable logic component (2) is designed to detect unauthorised data exchange and, if necessary, take corrective actions;
- a processor connection (3) connected to the programmable logic component (2) for exchanging electronic data with a central processor (11) of the personal computer (10);
- peripheral device connections (5) connected to the programmable logic component (2) for exchanging electronic data with peripheral devices (13) for data input and/or data output connected to the personal computer (10);
and
- a memory module (6) which is connected to the programmable logic component (2) and comprises initialisation data for the logic component (2),
wherein
a comparing means comprised by the process and control unit is implemented in the programmable logic component (2) by means of said programming and serves for comparing electronic data exchanged between components of the personal computer with predefined stored monitoring data;
and
wherein
the stored monitoring data can be adjusted depending on incoming electronic data, wherein a received data sequence is recognised by the comparing means which then triggers a predefined control function that, as a result, causes the monitoring data to be adjusted, said data sequence being received via the keyboard or via the network connection of the personal computer.

2. The security module (1) as claimed in claim 1, **characterised in that** the plurality of functional components is realised as an encapsulated system so that the functional components are combined to form an independently operating system.

3. The security module (1) as claimed in claim 1, including a comparing means which is implemented in the programmable logic component (2) by means of programming and is comprised by the process and control unit for the purpose of comparing electronic data exchanged between the plurality of functional components with predefined stored monitoring data.

4. The security module (1) as claimed in any one of claims 1 to 3, **characterised in that** the plurality of functional components is implemented on a plug-in board.

5. The security module (1) as claimed in any one of claims 1 to 4, **characterised in that** the plurality of functional components is implemented on a motherboard of the personal computer (10).

6. The security module (1) as claimed in claim 5, **characterised in that** the plurality of functional components is implemented at least in part in a chip set of the motherboard.

7. The security module (1) as claimed in claim 6, **characterised in that** the plurality of functional components is implemented at least in part in a Northbridge chip of the motherboard's chip set.

8. The security module (1) as claimed in any of the preceding claims, **characterised in that** the memory module (6) is established in a RAM-memory of the personal computer (10).

9. The security module (1) as claimed in any of the preceding claims, **characterised in that** the circuit is connected to a network card which has another permanently assigned MAC address or 'Media Access Control' address.

10. The security module (1) as claimed in any of the preceding claims, **characterised in that** the stored monitoring data may be adjusted depending on the incoming electronic data.

11. The security module (1) as claimed in any of the preceding claims, **characterised in that** the personal computer (10) is a mobile computer such as a laptop computer or a personal digital assistant.

12. A method for controlling and monitoring data traffic in a personal computer (10) by using a security module (1) as claimed in any of the preceding claims, wherein a processor connection (3) of the security module (1) which is connected to a programmable logic component (2) of the security module (1) communicates with a central processor (11) of the personal computer (10) for exchanging electronic data, wherein a hard disk connection (4) of the security module (1) connected to the programmable logic component (2) has a hard disk (12) of the personal computer (10) coupled thereto for exchanging electronic data, wherein peripheral device connections (5) of the security module (1) connected to the programmable logic component (2) have peripheral devices (13) coupled thereto for data input and/or data output, and wherein the programmable logic component (2) is connected to a memory module (6) which comprises initialisation data for the programmable logic component (2), said method comprising the following steps:
- a process and control device is made operational within the programmable logic component (2) of the security module (1) through auto-initialisation of said programmable logic component (2) by using the initialisation data from the memory module (6); and
- any incoming and/or outgoing data traffic of the hard disk (12) of the personal computer (10) as well as any data traffic between the peripheral devices (12) for data input and/or data output and the central processor (11) of the personal computer (10) are exclusively executed via the security module (1) and controlled and monitored via the process and control unit.

13. The method as claimed in claim 12, **characterised in that** any incoming and/or outgoing data traffic of the hard disk (12) of the personal computer (10) as well as any data traffic between the peripheral devices (13) for data input and/or data output and the central processor (11) of the personal computer (10) are executed via the security module (1) in such a manner as to be transparent to the central processor (11), the hard disk (12), and the peripheral devices (13) for data input and/or data output.

14. The method as claimed in claim 12 or 13, **characterised in that** any data of the data traffic executed via the security module (1) is being compared in said security module (1) with predefined stored comparative data using a comparing means.

15. The method as claimed in any one of claims 12 to 14, **characterised in that** auto-initialisation of the programmable logic component (2) takes place when the operating voltage is switched on.

## Revendications

1. Module de sécurité (1) destiné à commander et contrôler un trafic de données d'un système informatique avec un processeur central (ordinateur personnel) (10), avec plusieurs éléments fonctionnels qui sont respectivement implémentés par matériel et logiciel informatiques, lesdits plusieurs éléments fonctionnels comprenant :
- un élément logique programmable (2) qui commande et contrôle le trafic de données de l'ordinateur personnel (10) et
dans lequel est implémenté par programmation un dispositif de traitement et de commande destiné au traitement de données électroniques qui sont échangées entre les composants de l'ordinateur personnel,
dans lequel
le dispositif de traitement et de commande sert à commander tous les éléments fonctionnels du module de sécurité (1) indépendamment du microprocesseur (11), dans lequel
l'élément logique programmable (2) est exécuté par auto-initialisation lors d'une mise en tension de service,
dans lequel
l'élément logique programmable (2) est réalisé de manière à pouvoir détecter un échange non autorisé de données et, le cas échéant, à pouvoir intervenir de manière corrective.
- un connecteur de processeur (3) relié à l'élément logique programmable (2) pour l'échange de données électroniques avec un processeur central (11) de l'ordinateur personnel (10);
- des connecteurs d'appareils périphériques (5) reliés à l'élément logique programmable (2) pour l'échange de données électroniques avec des périphériques (13) couplés à l'ordinateur personnel (10) destinés à l'entrée de données et/ou à la sortie de données,
et
- un module de mémoire (6) relié à l'élément logique programmable (2) et comprenant des données d'initialisation pour l'élément logique (2),
dans lequel
un dispositif comparateur compris dans le dispositif de traitement et de commande est implémenté dans l'élément logique programmable (2) au moyen de ladite programmation afin de comparer des données électroniques échangées entre des composants de l'ordinateur personnel avec des données de contrôle enregistrées préalablement définies ; et
dans lequel
les données de contrôle enregistrées peuvent être adaptées en fonction des données électroniques entrantes, une succession de données reçue étant reconnue par le dispositif comparateur et celui-ci déclenchant, sur ce, une fonction de commande prédéfinie dont le résultat se manifeste par une adaptation des données de contrôle, ladite succession de données étant reçue par le clavier ou via la connexion réseau de l'ordinateur personnel.

2. Module de sécurité (1) selon la revendication 1, **caractérisé en ce que** lesdits plusieurs éléments fonctionnels sont réalisés sous forme d'un système encapsulé de sorte que les éléments fonctionnels sont regroupés en un système opérant de manière autonome.

3. Module de sécurité (1) selon la revendication 1, avec un dispositif comparateur compris dans le dispositif de traitement et de commande et implémenté dans l'élément logique programmable (2) au moyen de ladite programmation afin de comparer des données électroniques échangées entre lesdits plusieurs éléments fonctionnels avec des données de contrôle enregistrées préalablement définies.

4. Module de sécurité (1) selon l'une quelconque des revendications 1 à 3, **caractérisé en ce que** lesdits plusieurs éléments fonctionnels sont implémentés sur une carte d'extension.

5. Module de sécurité (1) selon l'une quelconque des revendications 1 à 4, **caractérisé en ce que** lesdits plusieurs éléments fonctionnels sont implémentés sur une carte mère de l'ordinateur personnel (10).

6. Module de sécurité (1) selon la revendication 5, **caractérisé en ce que** lesdits plusieurs éléments fonctionnels sont implémentés au moins partiellement dans un jeu de puces de la carte mère.

7. Module de sécurité (1) selon la revendication 6, **caractérisé en ce que** lesdits plusieurs éléments fonctionnels sont réalisés au moins partiellement dans une puce pont nord du jeu de puces de la carte mère.

8. Module de sécurité (1) selon l'une quelconque des revendications précédentes, **caractérisé en ce que** le module de mémoire (6) est réalisé dans une mémoire vive (RAM) de l'ordinateur personnel (10).

9. Module de sécurité (1) selon l'une quelconque des revendications précédentes, **caractérisé en ce que** le circuit est relié à une carte réseau qui présente une autre adresse MAC, acronyme de Media Access Control, attribuée de manière fixe.

10. Module de sécurité (1) selon l'une quelconque des revendications précédentes, **caractérisé en ce que** les données de contrôle enregistrées peuvent être adaptées en fonction des données électroniques entrantes.

11. Module de sécurité (1) selon l'une quelconque des revendications précédentes, **caractérisé en ce que** l'ordinateur personnel (10) est un ordinateur mobile tel qu'un ordinateur portable ou un assistant numérique personnel.

12. Procédé destiné à commander et contrôler un trafic de données d'un ordinateur personnel (10) à l'aide d'un module de sécurité (1) selon l'une quelconque des revendications précédentes, lors duquel un connecteur de processeur (3) du module de sécurité (1) qui est relié à un élément logique programmable (2) dudit module de sécurité (1) communique avec un processeur central (11) de l'ordinateur personnel (10) en vue de l'échange de données électroniques, lors duquel un disque dur (12) de l'ordinateur personnel (10) est couplé, en vue de l'échange de données électroniques, à un connecteur de disque dur (4) du module de sécurité (1) qui est relié à l'élément logique programmable (2), lors duquel des périphériques (13) sont couplés, en vue de l'entrée de données et/ou de la sortie de données, à des connecteurs d'appareils périphériques (5) du module de sécurité (1) qui sont reliés à l'élément logique programmable (2), lors duquel l'élément logique programmable (2) est relié à un module de mémoire (6) qui comprend des données d'initialisation pour l'élément logique programmable (2), et lors duquel ledit procédé comprend les étapes suivantes :
- un dispositif de traitement et de commande est rendu opérationnel dans l'élément logique programmable (2) du module de sécurité (1) au moyen de l'auto-initialisation de l'élément logique programmable (2) en utilisant les données d'initialisation enregistrées dans le module de mémoire (6) ; et
- un trafic de données en provenance et/ou à destination du disque dur (12) de l'ordinateur personnel (10) ainsi qu'un trafic de données entre les périphériques (12) destinés à l'entrée de données et/ou à la sortie de données et le processeur central (11) de l'ordinateur personnel (10) sont effectués exclusivement via le module de sécurité (1) et sont commandés et contrôlés au moyen du dispositif de traitement et de commande.

13. Procédé selon la revendication 12, **caractérisé en ce que** le trafic de données en provenance et/ou à destination du disque dur (12) de l'ordinateur personnel (10) ainsi que le trafic de données entre les périphériques (13) destinés à l'entrée de données et/ou à la sortie de données et le processeur central (11) de l'ordinateur personnel (10) sont effectués via le module de sécurité (1) de manière transparente pour le processeur central (11), le disque dur (12) et les périphériques (13) destinés à l'entrée de données et/ou à la sortie de données.

14. Procédé selon la revendication 12 ou 13, **caractérisé en ce que** des données du trafic de données effectué via le module de sécurité (1) sont comparées dans le module de sécurité (1), au moyen d'un dispositif comparateur, avec des données de comparaison enregistrées préalablement définies.

15. Procédé selon l'une quelconque des revendications 12 à 14, **caractérisé en ce que** l'auto-initialisation de l'élément logique programmable (2) s'effectue lors d'une mise en tension de service.
